# FASCICULE DE BREVET EUROPEEN

(11) **EP 3 697 228 B1**
(45) Date de publication et mention de la délivrance du brevet: **04.05.2022**
(21) Numéro de dépôt: 18783512.9
(22) Date de dépôt: 16.10.2018
(51) Int. Cl.: A23J 1/20, A23J 3/08, A23J 3/30, A23C 9/14

(54) **CONCENTRAT OU ISOLAT DE PROTEINES SOLUBLES DE LAIT STABLE AU COURS DES TRAITEMENTS THERMIQUES, ET PROCEDE D'OBTENTION.**
KONZENTRAT ODER ISOLAT VON LÖSLICHEN MILCHPROTEINEN, DAS BEI WÄRMEBEHANDLUNGEN STABIL IST, UND VERFAHREN ZU DESSEN HERSTELLUNG
CONCENTRATE OR ISOLATE OF SOLUBLE MILK PROTEINS WHICH IS STABLE DURING HEAT TREATMENTS, AND PROCESS FOR OBTAINING SAME

(30) Priorité: 20.10.2017 FR 1759916
(43) Date de publication de la demande: 26.08.2020
(73) Titulaire: Groupe Lactalis, 53000 Laval (FR)
(72) Inventeur: LERUYET, Pascale, 53000 Laval (FR); DESBOIS, Pascal, 53000 Laval (FR); LECOEUR, Annie, 53000 Laval (FR)
(74) Mandataire: Cabinet Le Guen Maillet
(86) Numéro de dépôt international: PCT/EP2018/078160
(87) Numéro de publication internationale: WO 2019/076851

(56) Documents cités:
- WO-A1-02/28194
- WO-A1-92/11770
- US-A1- 2005 163 887
- US-A1- 2016 235 082
- RYAN K N ET AL: "Stability and mechanism of whey protein soluble aggregates thermally treated with salts", FOOD HYDROCOLLOIDS, ELSEVIER BV, NL, vol. 27, no. 2, 9 novembre 2011 (2011-11-09), pages 411-420, XP028352089, ISSN: 0268-005X, DOI: 10.1016/J.FOODHYD.2011.11.006 [extrait le 2011-11-18]
- SUTARIYA SURESH ET AL: "Effect of hydrogen peroxide on improving the heat stability of whey protein isolate solutions", FOOD CHEMISTRY, ELSEVIER LTD, NL, vol. 223, 9 décembre 2016 (2016-12-09), pages 114-120, XP029877824, ISSN: 0308-8146, DOI: 10.1016/J.FOODCHEM.2016.12.013
- HAVN S S ET AL: "Improving the foaming properties and heat stability of whey protein concentrates by phospholipase treatment", MILCHWISSENSCHAFT, VV GMBH VOLKSWIRTSCHAFTLICHER VERLAG. MUNCHEN, DE, vol. 61, no. 2, 1 janvier 2006 (2006-01-01), pages 188-191, XP009502544, ISSN: 0026-3788

## Description

La présente invention se situe dans les domaines techniques de l'alimentaire et de la nutrition santé et concerne un procédé de préparation d'un concentrat ou isolat de protéines solubles de lait, stable au cours des traitements thermiques, ainsi que le concentrat ou l'isolat obtenu par un tel procédé.

Les protéines laitières sont divisées en deux groupes : les caséines et les protéines solubles. On entend par protéines solubles les protéines dites majeures, par référence à leur concentration, qui sont l'alpha lactalbumine et la béta lactoglobuline, et des protéines dites mineures qui sont la sérum albumine (BSA pour Bovine sérum albumine), la lactoferrine, les immunoglobulines dont l'IgG et des facteurs de croissance.

Les protéines solubles du lait présentent des propriétés fonctionnelles et nutritionnelles très intéressantes en nutrition infantile, clinique, diététique et sportive. Leur valorisation dans ces domaines est en plein développement.

Il existe aujourd'hui sur le marché deux sources de protéines solubles du lait : la première source comprend les concentrats et les isolats de protéines obtenues à partir du traitement d'un lactosérum. La seconde source comprend les concentrats et les isolats de protéines obtenues à partir du traitement du lait. Les concentrats présentent une teneur en protéine comprise entre 35 et 80%, en particulier 75%. Les isolats sont plus concentrés et présentent une teneur en protéines supérieure à 80%, en particulier 90%.

Dans le cas de la première source, les protéines sont obtenues à partir du lactosérum qui est un co-produit de l'industrie laitière résultant de la fabrication du fromage. Le lactosérum est obtenu suite à la mise en œuvre de traitements thermiques, enzymatiques, chimiques ou d'un mixte, aboutissant à la coagulation du lait et la précipitation de la caséine sous forme de caillé. Différentes méthodes peuvent ensuite être mises en œuvre sur le lactosérum obtenu afin de séparer les protéines des autres substances qu'il contient, tels que les sels minéraux et le lactose. Parmi ces méthodes connues, on retiendra les méthodes de séparation par filtration sur membranes, telles que l'ultrafiltration ou la nanofiltration.

Dans le cas de la seconde source, les protéines sont obtenues directement de la phase soluble du lait par une méthode de séparation physique des composants du lait, telle que la microfiltration, sans traitement enzymatique, thermique ou chimique. Cette phase soluble se présente sous la forme d'un liquide parfaitement limpide contenant les protéines, le lactose, des sels minéraux et organiques et de l'eau. C'est alors à partir de cette phase soluble que sont mises en œuvre les méthodes de séparation physiques par membranes évoquées précédemment permettant d'isoler les protéines. Parmi les avantages à ne pas utiliser un lactosérum en tant que source de protéines on relèvera l'absence de résidus protéiques liés aux techniques de la fabrication du fromage, tels que des peptides de caséine (caséino-macropeptide) et de certaines protéoses peptones. Les caséino-macropeptides sont des molécules qui résultent de la dégradation enzymatique de la caséine présente dans le lait lors de la fabrication des fromages (hydrolyse de la caséine Kappa) et se retrouvent alors dans le lactosérum. Ces composés ont une composition en acides aminés qui diminue alors l'intérêt nutritionnel de l'isolat de protéines. D'une manière générale, les traitements appliqués lors de la fabrication des fromages aboutissent à des lactosérums extrêmement variables en termes de composition en protéines et en acides aminés ce qui rend la standardisation des compositions incorporant ces concentrats ou isolats de protéines de lactosérum très difficile.

Le procédé d'obtention d'un tel concentrat de protéines solubles directement à partir du lait, et non d'un lactosérum, est décrit dans le brevet français n° FR 2 809 595. Ce procédé est particulièrement avantageux. Comme mentionné précédemment, il fait intervenir des étapes de filtration membranaire sans aucune étape de réaction enzymatique, chimique ou thermique. En conséquence, la fraction contenant les protéines sériques obtenue en fin de procédé de fabrication ne se trouve pas contaminée par des résidus protéiques au contraire des concentrats ou isolats de lactosérum. Ainsi, selon ce procédé, le lait écrémé, ou demi écrémé, après avoir éventuellement subi une étape de pasteurisation, est traité par micro filtration afin d'éliminer la caséine, les matières grasses résiduelles et les bactéries et de ne conserver que la phase soluble contenant les protéines natives. Le perméat de microfiltration subit alors une étape d'ultrafiltration et/ou de nanofiltration dans le but de concentrer les protéines. L'ensemble du procédé se déroule à basse température, c'est-à-dire des températures non dénaturantes pour les protéines, et permet avantageusement la conservation des protéines sous leur forme native. Les concentrats obtenus selon ce procédé présentent la composition suivante, exprimée en poids :
- protéines solubles de lait : 10-80 %,
- matières minérales : 1-5%,
- sodium : 0,02-0,4%,
- potassium : 0,1-1,5 %
- matière grasse : moins de 0,4 %.

On observe que les compositions en protéines et en acides aminés de ces concentrats sont constantes. De plus, ils présentent un taux de thréonine plus bas que celui observé dans un isolat de lactosérum ainsi qu'un taux de tryptophane plus élevé ce qui les rend particulièrement adaptés en nutrition infantile. Tous ces avantages sont mentionnés dans le brevet français n° FR 2 809 595.

Si un tel concentrat ou isolat de protéines obtenu à partir de la phase soluble du lait, et non du lactosérum, est avantageux pour toutes les raisons mentionnées précédemment, il présente toutefois l'inconvénient de ne pas être stable lors des traitements thermiques tels que les traitements de stérilisation imposés aux produits dans lesquels il est incorporé, par exemple les boissons avant traitement U.H.T., ou lors de son ajout dans tout autre produit alimentaire devant être chauffé, par exemple une purée ou une soupe.

En effet, au-dessus d'une certaine température, en particulier au-dessus de 80°C, la béta lactoglobuline induit des phénomènes de coagulation dans le produit dans lequel elle se trouve, en fonction de sa concentration, du pH et la force ionique du milieu. Le produit présente alors une texture hétérogène, non conforme aux attentes et non adaptée à sa consommation, avec un aspect floculé pouvant aller jusqu'à la gélification. Ceci est particulièrement observé dans les boissons liquides stérilisées thermiquement, c'est à dire à des températures au-delà de 70°C et pouvant s'étendre à 90°C. Un phénomène de coagulation est un phénomène par lequel un milieu se prend en une masse solide. Cela s'explique par le fait que la chaleur provoque la dénaturation des protéines qui s'agrègent entre elles et précipitent, entraînant ainsi la coagulation.

US2005/0163887 décrit un procédé de production d'une protéine de lactosérum thermostable comprenant l'ajout d'une quantité efficace d'un réactif à la protéine de lactosérum ayant des ions minéraux libres. Les ions minéraux libres forment des composés hydrosolubles avec le réactif. Les composés hydrosolubles sont filtrés de la protéine de lactosérum pour réduire la concentration de minéraux libres et former une protéine de lactosérum thermostable.

La présente invention a ainsi pour but de résoudre le problème évoqué au paragraphe précédent et de proposer un concentrat ou isolat de protéines solubles de lait, ainsi qu'un procédé en permettant l'obtention, qui soit stable face aux traitements thermiques que subissent les produits dans lesquels il est intégré c'est-à-dire qui ne provoque pas de phénomènes de coagulation suite à de tels traitements imposés.

A cet effet, l'invention concerne un procédé d'obtention d'un concentrat ou isolat de protéines solubles de lait, stable face aux traitements thermiques, comportant les étapes suivantes:
a) obtention de protéines solubles de lait sous forme d'un concentrat ou d'un isolat obtenu par une méthode incluant la séparation physique par filtration des composants du lait,
b) dilution jusqu'à une valeur d'extrait sec de 10 à 15 %,
c) ajustement du pH entre 3,4 et 3,7,
d) maturation entre 30 et 60 min à une température comprise entre 50 et 60 °C,
e) dilution jusqu'à 3% ES,
f) séparation physique des protéines en une fraction (F1) contenant l'alpha lactalbumine, Immunoglobulines, lactoferrine, BSA et une fraction (F2) contenant la béta lactoglobuline,
g) récupération de la fraction (F1) et ajustement du pH à une valeur comprise entre 7 et 8,
h) récupération de la fraction (F2) et ajustement du pH à une valeur comprise entre 7 et 8,
i) concentration, à une température inférieure à 20°C, de la fraction (F2) jusqu'à une valeur d'extrait sec de 8-15%,
j) dénaturation de la béta lactoglobuline de la fraction (F2),
k) obtention d'une fraction F2 incluant la béta-lactoglobuline dénaturée,
l) mélange de la fraction (F1) obtenue à l'étape g) et de la fraction (F2) obtenue à l'étape k),
m) concentration du mélange, à une température inférieure à 20°C, jusqu'à une valeur d'extrait sec de 25-30%,
n) transformation en poudre et séchage selon des techniques se déroulant à une température inférieure à 60°C,
o) obtention d'un concentrat ou isolat de protéines solubles de lait thermostable sous forme de poudre.

Au cours du procédé selon l'invention, la béta lactoglobuline est séparée des autres protéines et subit un traitement de dénaturation. Une fois dénaturée, la béta lactoglobuline perd ses propriétés de gélification qui sont à l'origine de la modification de texture et de la coagulation observées dans les produits stérilisés dans lesquels les concentrats ou isolats de l'état de la technique sont incorporés. La fraction contenant la béta lactoglobuline dénaturée est par la suite mélangée avec la fraction contenant les autres protéines de lait qui sont, quant à elles conservées sous leur forme native. En effet, concernant cette fraction, le procédé selon l'invention se déroule à des températures permettant la préservation de leur forme native.

A l'issue du procédé, il est obtenu un concentrat ou un isolat de protéines solubles de lait stable face aux traitements thermiques des produits dans lesquels il est susceptible d'être incorporé. En particulier, il permet la formulation de boissons stérilisées par traitement thermique, notamment UHT, contenant jusqu'à 10 à 15%, en poids, de protéines avec une texture conforme à cette famille de produits sans provoquer d'instabilité du produit lors de la transformation et de la conservation. Une formulation de boisson hyperprotéique U.H.T. avec des protéines solubles du lait extraites par microfiltration et concentrées par ultrafiltration à froid, mais non traitées par le procédé selon l'invention, aboutirait à un produit floculé pouvant aller jusqu'à la gélification.

Le concentrat ou l'isolat selon l'invention peut également avantageusement être utilisé en saupoudrage dans les aliments du quotidien tels que les soupes, les purées, les jus de fruit pour en enrichir le contenu en protéines tout en conservant aux aliments une texture homogène et agréable. Un enrichissement de ces produits avec une poudre d'isolat ou de concentrat de protéines solubles du lait non traité par le procédé selon l'invention aboutirait là encore à des aliments granuleux, épais et peu appétants.

De plus, la dénaturation de la béta lactoglobuline augmente la digestibilité du concentrat ou de l'isolât et permet une assimilation plus rapide des protéines par rapport à un même concentrat ou isolat contenant la béta lactoglobuline non dénaturée. En outre, l'absorption des protéines du concentrat ou de l'isolat selon l'invention est séquentielle ce qui permet d'optimiser l'efficacité individuelle de chaque protéine. Enfin, du fait de sa dénaturation, la béta lactoglobuline n'interagit pas avec les autres protéines du concentrat ou de l'isolât ou encore avec des protéines apportées par d'autres aliments consommés au même moment.

De ce fait, sa disponibilité est améliorée, en particulier son apport en certains acides aminés, tels que la leucine, est optimisé.

Avantageusement, l'étape (f) du procédé est réalisée par centrifugation ou micro filtration.

Préférentiellement, les étapes de concentration (i) et (m) sont réalisées par osmose directe ou osmose inverse.

Selon un mode de réalisation, le procédé comprend, entre les étapes h) et j), une étape p) d'ajout d'un ou plusieurs composés d'intérêt nutritionnel, nutraceutique, ou pharmaceutique, préférentiellement hydrophobes, autres qu'une protéine d'origine laitière.

Avantageusement, l'étape (p) du procédé est réalisée par ajout du ou des composés d'intérêt nutritionnel, nutraceutique, ou pharmaceutique, dans la fraction F2 et mélange sous agitation.

Selon un mode de réalisation préféré de l'invention, l'étape j) de dénaturation de la béta lactoglobuline est réalisée par traitement thermique incluant le chauffage de la fraction F2 à une température comprise entre 80 et 95°C pendant une durée comprise entre 5 et 30 minutes.

Selon un autre mode de réalisation de l'invention, l'étape j) de dénaturation de la béta lactoglobuline est réalisée par traitement à haute pression en semi-continu à une pression comprise entre 1000 et 6000 bars et à une température maintenue au-dessous de 20 à 30°C.

Préférentiellement, à l'étape (1) le mélange se réalise selon un ratio fraction F1/fraction F2 compris entre 0,2 et 1.

Avantageusement, le procédé comprend, entre les étapes m) et n), une étape (w) de traitement aux ultrasons du mélange.

De manière avantageuse, l'étape (a) comprend les étapes suivantes :
r) obtention de protéines solubles du lait par microfiltration d'un lait, de préférence écrémé,
t) déminéralisation sélective de la phase soluble du lait par une étape de nanofiltration (t2) ou d'ultrafiltration (t1),
v) obtention d'un concentrat ou isolat de protéines solubles sous forme de rétentat.

Le concentrat ou isolat obtenu au cours de cette étape (v) est alors utilisé à l'étape (a) précédemment mentionnée.

Selon une variante de l'invention, le procédé comprend en outre, avant l'étape (t2) de nanofiltration, une étape (t1) d'ultrafiltration, la nanofiltration de l'étape (t2) étant alors opérée sur le perméat d'ultrafiltration de cette étape (t1), puis une étape (u) de mélange, en proportions prédéterminées, du rétentat de nanofiltration de l'étape (t2) avec le rétentat d'ultrafiltration de l'étape (t1).

L'invention concerne encore un concentrat ou isolat de protéines solubles du lait, susceptible d'être obtenu par le procédé selon l'invention et comprenant entre 35 et 95%, en poids, de protéines solubles de lait.

Selon une caractéristique de l'invention, le concentrat ou l'isolat contient :
- de l'alpha lactalbumine, de la sérum albumine, de la lactoferrine, des immunoglobulines et des facteurs de croissance sous forme native,
- de la béta lactoglobuline stabilisée sous forme dénaturée.

Selon un mode de réalisation, le concentrat ou l'isolat de protéines solubles selon l'invention contient un ou plusieurs composés d'intérêt nutritionnel, nutraceutique, ou pharmaceutique, préférentiellement hydrophobes, autres qu'une protéine d'origine laitière, tels que des lipides, des acides gras, des vitamines, des enzymes.

L'invention concerne encore une composition de nutrition orale ou entérale, comprenant un concentrat ou isolat de protéines solubles tel que décrit précédemment.

Au sens de l'invention, la nutrition entérale s'entend de la nutrition par sonde.

Préférentiellement, la composition se présente sous la forme d'un liquide, d'un aliment, d'une boisson, notamment stérilisée, d'une soupe, d'une crème, d'un gel ou d'une purée.

Il est en effet possible de formuler, à l'aide du concentrat ou de l'isolat de protéines solubles selon l'invention, tout produit destiné à la nutrition, notamment la nutrition clinique orale ou entérale, tel que des boissons, des poudres, des crèmes, des gels, ou toute formulation nécessitant un apport protéique spécifique.

Les formulations peuvent être hyperprotéiques et hypercaloriques, normo caloriques ou hypocaloriques et destinées aux nourrissons, enfants, adultes sains, personnes âgés, personnes dénutries, sportifs...

Il peut s'agir encore de formules pour animaux, notamment de compétition tels que les chevaux, les chiens, ou pour les animaux de compagnie âgés ou ayant des besoins protéiques spécifiques.

Par apport protéique spécifique, il faut comprendre un apport en quantité d'une ou des protéines du concentrat ou de l'isolât obtenu par le procédé selon l'invention, un apport en un ou des acides aminés, un apport en peptides, propres à la particularité de composition de l'isolat ou concentrat. Cet apport protéique peut être en outre conjugué avec un apport spécifique en un ou plusieurs autres composés d'intérêt nutritionnel, nutraceutique, ou pharmaceutique.

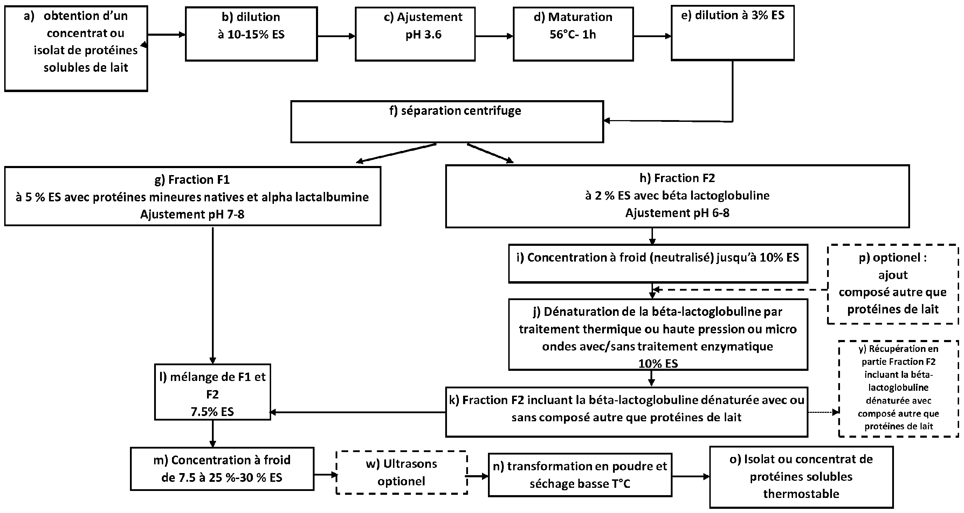

L'invention est détaillée dans ce qui suit, à l'aide de la description de modes de réalisation, en lien avec les Figs. 1 à 3.

### Exemple 1 : obtention d'un concentrat ou isolat de protéines solubles de lait thermostable

Un concentrat ou isolat de protéines soluble de lait stable face aux traitements thermiques est obtenu par la mise en œuvre du procédé selon l'invention illustrée à la Fig. 1.
*a) obtention de protéines solubles de lait sous forme d'un* concentrat *ou d'un isolat obtenu par une méthode incluant la séparation physique par filtration des composants du lait.*
   Le concentrat ou l'isolat peut se présenter sous la forme d'un rétentat d'ultrafiltration d'un perméat de micro filtration de lait obtenu par exemple à l'aide du procédé décrit dans le brevet français n° FR 2 809 595 et tel que rappelé dans l'exemple 3 à suivre.
   Alternativement, il s'agit d'un concentrat ou isolat distribué dans le commerce, en particulier celui distribué sous la dénomination commerciale Prolacta^{®}, ou encore Pronativ^{®}, par la société Lactalis Ingrédients (France), et obtenu après transformation en poudre par déshydratation et séchage dudit rétentat d'ultrafiltration mentionné au paragraphe précédent. Alternativement, le concentrat ou l'isolat peut être utilisé directement sous forme liquide en l'absence d'étape de séchage.
   Dans les deux cas, les protéines solubles ne sont pas obtenues à partir d'un lactosérum mais à partir de lait.
*(b) dilution jusqu'à une valeur d'extrait sec de 10 à 15 %*
   La dilution est réalisée avec de l'eau. Ce taux d'extrait sec permet de maintenir une viscosité compatible avec les étapes ultérieures.
*c) ajustement du pH entre 3,4 et 3,7 puis d) maturation entre 30 et 60 min à une température comprise entre 50 et 60 °C.*
   Au cours des étapes c) et d), les propriétés basées sur les différences de solubilité des protéines majeures de la phase soluble du lait sont mises en œuvre pour séparer une fraction enrichie en alpha lactalbumine et une fraction enrichie en béta lactoglobuline. Dans ces conditions, l'alpha lactalbumine précipite de façon réversible et la béta lactoglobuline reste soluble.
*e) dilution avec de l'eau à 50-60°C jusqu 'à obtenir une valeur d'extrait sec de 3%.*
*f*) *séparation physique des protéines en une fraction (F1) contenant l'alpha lactalbumine, Immunoglobulines, lactoferrine, BSA et une fraction (F2) contenant la béta lactoglobuline.*
   La séparation physique est réalisée par centrifugation continue à 10 000 tours/min à une température comprise entre 50 et 60°C ou par micro filtration sur une membrane présentant un seuil de coupure de 0,1 µm. La séparation physique permet l'obtention :
   - d'une phase insolubilisée dite « phase lourde » contenant l'alpha lactalbumine majoritairement (fraction F1), mais également des protéines mineures comme les immunoglobulines, la lactoferrine et la BSA,
   - d'une phase soluble dite « phase légère » contenant la béta lactoglobuline (fraction F2).
*g) récupération de la fraction (F1) et neutralisation par ajustement du pH à une valeur comprise entre 7 et 8.*
   La neutralisation est réalisée par un alcali approprié comme l'hydroxyde de sodium, l'hydroxyde de potassium ou encore l'hydroxyde de calcium. Cela permet de solubiliser les protéines dont l'alpha lactalbumine qui retrouve sa forme native.
*h) récupération de la fraction (F2) et neutralisation par ajustement du pH à une valeur comprise entre 6 et 8,*
*i) concentration, à une température inférieure à 20°C, de la fraction (F2) jusqu'à une valeur d'extrait sec de 8-15%.*
   Au cours des étapes h et i, la fraction F2 à très faible ES (extrait sec) est neutralisée par une solution alcaline appropriée et concentrée à froid entre 10 et 20°C par une technique d'osmose directe ou d'osmose inverse permettant un facteur de réduction volumique de 5 pour obtenir un ES de 6-12% environ. Cette concentration à froid permet la préservation de la forme native de la protéine.
*j) dénaturation de la béta lactoglobuline de la fraction (F2), en particulier par traitement thermique, traitement à haute pression ou traitement par micro-ondes.*
   Le traitement thermique appliqué consiste à soumettre la fraction F2 à une température supérieure à 80°C et inférieure à 95°C pendant un temps compris entre 5 et 30 minutes.
   La force ionique et le pH de la solution doivent être maîtrisés pour une dénaturation optimale de la fraction F2, la teneur en calcium ne doit pas être supérieure à 4 mM et le pH doit être préférentiellement compris entre 6,2 et 6,6.
   De manière optionnelle, un traitement enzymatique de la béta lactoglobuline peut avantageusement être mis en œuvre au préalable à la dénaturation dirigée de la béta lactoglobuline par l'action de la transglutaminase sur la béta lactoglobuline qui induit une réticulation de la protéine par la formation de liaisons entre les groupements amines des acides aminés comme la lysine. Ces réactions de réticulation permettront d'influencer la texture obtenue après dénaturation dirigée.
   A l'issue de ce traitement de dénaturation, les propriétés de gélification de la béta lactoglobuline pendant les traitements thermiques ultérieurs des produits dans lesquels elle est incorporée sont perdues. Cette propriété est en effet incompatible avec l'élaboration de boissons stérilisées riches en protéines solubles du lait, notamment de boissons UHT hyperprotéiques. Il est ainsi possible, grâce au procédé selon l'invention, de prévenir cette gélification en mettant en œuvre une dénaturation thermique contrôlée avant d'appliquer à un produit enrichi en béta lactoglobuline un traitement UHT par exemple.
*k) obtention d'une fraction F2 incluant la béta-lactoglobuline dénaturée,*
*l) mélange de la fraction (F1) obtenue à l'étape g) et de la fraction (F2) obtenue à l'étape k).*
   Les fractions F1 et F2 sont mélangées à parts égales ou non. Il est donc possible de les mélanger de manière à obtenir un ratio alpha lactalbumine / béta lactoglobuline identique à celui relevé à l'origine dans le perméat de micro filtration de l'étape (a). De manière alternative, l'une ou l'autre des protéines peut être favorisée en termes de concentration. Ainsi par exemple le ratio F1/F2 peut varier de 25/75 à 75/25.
*m) concentration du mélange, à une température inférieure à 20°C, jusqu'à une valeur d'extrait sec de 25-30%*
   Une étape de concentration est nécessaire avant le séchage du produit. La méthode de concentration mise en œuvre doit préserver l'état natif de l'alpha lactalbumine, les immunoglobulines, la lactoferrine et la BSA. On mettra donc en œuvre une concentration à froid entre 10 et 20°C par osmose directe ou osmose inverse ou tout autre moyen de concentration n'excédant pas 20°C.
*w) traitement par ultrasons (optionnel)*
   Une technique d'ultrasons peut être utilisée pour réduire la viscosité du mélange obtenu aux extraits secs élevés entre 25 et 30%. Cette réduction de viscosité peut avantageusement atteindre 35% avec une sonde de 20 KHz et perdure 20 à 30 minutes avant atomisation.
*n) transformation en poudre et séchage*
   Cette étape est réalisée préférentiellement par des techniques n'élevant pas la température du concentrat ou de l'isolat au-dessus de 60°C.
   Le mélange est déshydraté et transformé en poudre par atomisation.
   De manière à préserver les qualités nutritionnelles et l'activité biologique du produit, et l'état natif des protéines issues de la fraction F1 dans la poudre, un procédé de séchage adapté à basse température est mis en œuvre avec un matériel comprenant une chambre de pulvérisation et de séchage partiel à température modérée et un finisseur de séchage à basse température. A ce titre, une température de sortie de tour entre 60 et 80°C est avantageusement utilisée par rapport à des températures habituellement plus élevées (85 à 95°C). Les particules de poudre sont alors réalisées en respectant le caractère natif de l'alpha lactalbumine et des protéines mineures.
*o) obtention d'un concentrat ou isolat de protéines solubles de lait thermostable.*
   Le concentrat ou l'isolat de protéines solubles de lait obtenu à l'issue du procédé présente tous les avantages du concentrat ou de l'isolat de protéines de départ mentionné à l'étape (a) mais présente l'avantage supplémentaire de ne pas engendrer de phénomènes affectant la texture et l'apparence des produits dans lesquels il est intégré à la suite d'un traitement thermique de quelque nature appliqué à ces produits. La dénaturation de la béta lactoglobuline au cours du procédé permet de rendre le concentrat ou l'isolat stable face aux traitements thermiques ultérieurs. L'ensemble des étapes du procédé réalisé sur les autres protéines solubles se déroule par contre à des températures préservant leur état natif.
   Le concentrat ou l'isolat selon l'invention peut être identique d'un point de vue qualitatif et quantitatif au concentrat ou à l'isolat de départ, notamment en termes de concentration en protéines et de composition en acides aminés.
   Il contient :
      - entre 35 et 95% de protéines, plus préférentiellement entre 85 et 95%, en poids,
      - la béta lactoglobuline sous forme dénaturée, stabilisée vis-à-vis des procédés mettant en œuvre des traitements thermiques tels que la stérilisation, l'UHT,
      - l'alpha lactalbumine, la sérum albumine (BSA), la lactoferrine, des immunoglobulines et des facteurs de croissance sous forme native et soluble. Leurs propriétés biologiques sont ainsi conservées.

### Exemple 2 : obtention d'une fraction de béta-lactoglobuline enrichie en un ou plusieurs autres composés d'intérêt nutritionnel, nutraceutique, ou pharmaceutique et obtention d'un concentrat ou isolat de protéines solubles de lait thermostable également enrichi

Selon un mode de réalisation de l'invention, le procédé comprend l'ajout au cours du procédé d'un ou plusieurs composés d'intérêt nutritionnel, nutraceutique, ou pharmaceutique, autres qu'une protéine d'origine laitière, préférentiellement de composés hydrophobes. I1 est ainsi obtenu un concentrat ou isolat de protéines solubles de lait enrichi en de tels composés. Cette technologie permet de rendre encore plus intéressant, fonctionnel et efficace, le concentrat ou l'isolat selon l'invention, sur le plan de ses applications et sur le plan biologique.

Parmi ces composés, on citera les vitamines, telles que la vitamine D, des acides gras, tels que du DHA, de l'acide arachidonique, des co-enzymes tels que le coenzyme Q10, des lipides tels que des stérols, par exemple du cholestérol, des antioxydants, des senolytiques tel que la quercétine ou tout autre composé présentant l'un des intérêts mentionnés précédemment.

Dans cet exemple, le procédé mis œuvre comporte toutes les étapes du procédé selon l'exemple 1 mais comprend l'étape supplémentaire suivante :
*p) ajout du ou des composés dans la fraction F2, entre l'étape (h) de récupération de la fraction (F2) et l'étape (j) de dénaturation de la béta lactoglobuline*

La fixation de ces molécules ajoutées dans la fraction F2 se fait par mise en contact de solutions aqueuses contenant d'une part la béta lactoglobuline, d'autre part la molécule à fixer pendant un temps minimum d'1 heure sous agitation contrôlée. La présence d'alcool dans des proportions de 5 à 10% dans la solution aqueuse de la molécule à fixer si elle est hydrophobe peut faciliter la fixation de cette molécule.

La forme native de la béta lactoglobuline est bien connue et spécifique. Elle est capable, de par sa structure, de fixer des molécules, principalement hydrophobes. Ces molécules peuvent se fixer sur les deux sites spécifiques à raison de deux molécules au maximum par molécule de béta lactoglobuline. Il est également possible de fixer deux molécules de nature différente simultanément.

Après l'étape de dénaturation, la béta lactoglobuline prend une structure tridimensionnelle particulière qui permet de protéger le ou les composés fixés. Cette structure particulière est nommée « bétasome ».

Ainsi, suite à l'étape de j) de dénaturation, on obtient une fraction enrichie en béta lactoglobuline se présentant comme un transporteur, ou un vecteur, de composés d'intérêt nutritionnel, nutraceutique, ou pharmaceutique.

Le procédé se poursuit ensuite comme dans l'exemple 1 avec les étapes suivantes :
*l) mélange de la fraction (F1) obtenue à l'étape g) et de la fraction (F2) obtenue à l'étape k),*

Les fractions F1 et F2 sont mélangées dans les mêmes conditions que dans l'exemple 1.

*Puis l'ensemble des étapes m) à o) est réalisé.*

Le concentrat ou l'isolat de protéines obtenu comprend alors :
- entre 35 et 95% de protéines, plus préférentiellement entre 80 et 95%, en poids,
- la béta lactoglobuline sous forme dénaturée, stabilisée vis-à-vis des procédés mettant en œuvre des traitements thermiques tels que la stérilisation, l'UHT,
- l'alpha lactalbumine, la sérum albumine, la lactoferrine, des immunoglobulines et des facteurs de croissance sous forme native et soluble,
- une ou plusieurs molécules d'intérêt nutritionnel nutraceutique, ou pharmaceutique, encapsulées dans la béta lactoglobuline.

La fraction enrichie en béta lactoglobuline transportant le ou les composés d'intérêt nutritionnel, nutraceutique, ou pharmaceutique, peut également être valorisée indépendamment des autres protéines de lait. Ainsi, selon une variante de l'invention, le procédé comprend une étape :
*y) de récupération d'une partie au moins de la fraction F2 incluant la béta-lactoglobuline dénaturée couplée à un autre composé.*

Cette fraction peut être ensuite transformée en une poudre et être utilisée en tant que telle dans l'enrichissement de produits alimentaires, nutraceutiques ou pharmaceutiques.

### Exemple 3: obtention de protéines solubles de lait sous la forme d'un concentrat ou d'un isolat apte à être utilisé à l'étape a)

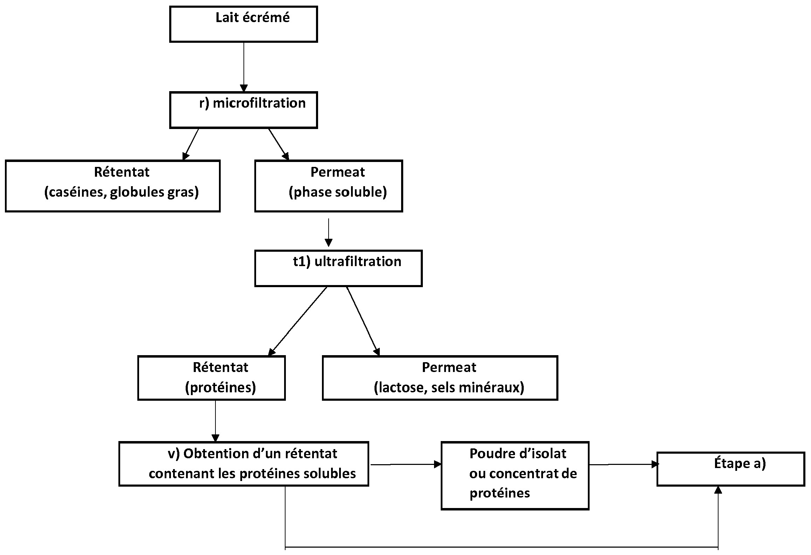

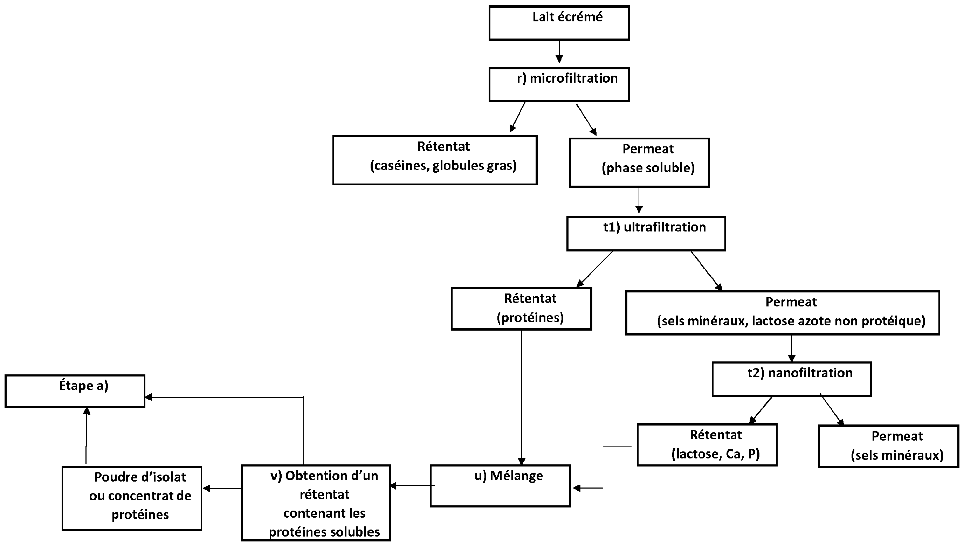

Les Figs. 2 et 3 illustrent des procédés d'obtention d'un concentrat ou isolat de protéines solubles de lait, apte à être utilisé comme matière de départ dans l'étape (a) du procédé selon l'invention. Ces procédés mettent en œuvre des étapes de filtrations connues de l'homme du métier et sont par ailleurs détaillés dans le brevet français publié FR2 809 595.

Un lait écrémé subit une étape r) de micro filtration à travers une membrane minérale présentant un seuil de coupure de 0.1 µm (Fig.2). Le perméat de microfiltration contient la phase soluble du lait contenant les protéines solubles notamment. Sur ce perméat est réalisée une étape (t1) qui permet d'obtenir un rétentat contenant les protéines solubles.

A l'étape v) est obtenu un concentrat ou isolat sous forme d'un rétentat contenant les protéines solubles qui peut être utilisé à l'étape a) du procédé selon l'invention illustré dans les exemples 1 et 2.

De manière alternative, le rétentat est transformé en poudre par atomisation avant d'être utilisé à l'étape a) du procédé selon l'invention illustré dans les exemples 1 et 2.

Selon une variante de ce procédé illustré à la Fig. 3, sur le perméat d'ultrafiltration de l'étape (t1) est réalisée une étape de nanofiltration (t2) afin d'obtenir un rétentat contenant le lactose, du calcium et du phosphore. Le rétentat de nanofiltration est mélangé au rétentat d'ultrafiltration lors d'une étape (u).

A l'étape v) est obtenu un rétentat contenant les protéines solubles qui peut être utilisé à l'étape a) du procédé selon l'invention illustré dans les exemples 1 et 2.

De manière alternative, le rétentat est transformé en poudre avant d'être utilisé à l'étape a) du procédé selon l'invention illustré dans les exemples 1 et 2.

### Exemple 4 : Produits enrichis à l'aide d'un isolat de protéines solubles de lait obtenu selon l'exemple 1 et 2

Des boissons liquides ont été formulées à l'aide d'un isolat de protéines solubles de lait du commerce contenant 95 % de protéines (Prolacta^{®}, ou encore Pronativ^{®}, commercialisé par la société Lactalis Ingrédients (France)) non traité par le procédé selon l'invention d'une part (TEMOIN), et à l'aide d'un isolat de protéines identique contenant 95 % de protéines (Prolacta ^{®}, ou encore Pronativ^{®}) traité par le procédé selon l'invention et décrit dans l'exemple 1 et 2 (INVENTION). Les compositions des boissons sont indiquées dans le Tableau 1 ci-dessous.

**Tableau 1**

| Formule du produit humide/100g | « Témoin » isolat de protéines sériques Prolacta^{®} avant la mise en œuvre du procédé selon l'invention | « Invention » isolat de protéines sériques Prolacta^{®} après la mise en œuvre du procédé selon l'invention |
|---|---|---|
| Kcal/100g | 150 | 150 |
| ES de protéines solubles du lait | 11.2 | 11.2 |
| Huile de colza ou végétale | 3.2 | 3.2 |
| Sucre | 16.0 | 16.0 |
| Texturant | 0.1 | 0.1 |
| Mix minéral et vitamines | 1.5 | 1.5 |
| Eau | 68.0 | 68.0 |

Les ingrédients sont mélangés selon les règles établies pour un tel mélange et les boissons obtenues subissent un traitement UHT direct. Les boissons liquides « témoin » et « essai » sont conditionnées en bouteilles de 100ml (ou 200ml).

Après stérilisation UHT, la boisson « TEMOIN» se présente sous forme d'un gel déstabilisé, non homogène et impropre à une consommation de la boisson.

La boisson « INVENTION » présente une texture légèrement épaissie. Le produit est conforme en composition protéique et la texture est agréable, homogène et propre à la consommation.

## Revendications

1. Procédé d'obtention d'un concentrat ou d'un isolat de protéines solubles de lait, stable face aux traitements thermiques, comportant les étapes suivantes :
a) obtention de protéines solubles de lait sous forme d'un concentrat ou d'un isolat obtenu par une méthode incluant la séparation physique par filtration des composants du lait,
b) dilution jusqu'à une valeur d'extrait sec de 10 à 15 %,
c) ajustement du pH entre 3,4 et 3,7,
d) maturation entre 30 min. et 60 min. à une température comprise entre 50 et 60 °C,
e) dilution jusqu'à 3% ES,
f) séparation physique des protéines en une fraction (F1) contenant l'alpha lactalbumine, Immunoglobulines, lactoferrine, BSA et une fraction (F2) contenant la béta lactoglobuline,
g) récupération de la fraction (F1) et ajustement du pH à une valeur comprise entre 7 et 8,
h) récupération de la fraction (F2) et ajustement du pH à une valeur comprise entre 6 et 8,
i) concentration, à une température inférieure à 20°C, de la fraction (F2) jusqu'à une valeur d'extrait sec de 8-15%,
j) dénaturation de la béta lactoglobuline de la fraction (F2),
k) obtention d'une fraction F2 incluant la béta-lactoglobuline dénaturée,
l) mélange de la fraction (F1) obtenue à l'étape g) et de la fraction (F2) obtenue à l'étape k),
m) concentration du mélange, à une température inférieure à 20°C, jusqu'à une valeur d'extrait sec de 25-30%,
n) transformation en poudre et séchage selon des techniques se déroulant à une température inférieure à 60°C,
o) obtention d'un concentrat ou isolat de protéines solubles de lait thermostable sous forme de poudre.

2. Procédé selon la revendication 1, **caractérisé en ce que** l'étape (f) est réalisée par centrifugation ou microfiltration.

3. Procédé selon l'une des revendications précédentes, **caractérisé en ce que** les étapes de concentration (i) et (m) sont réalisées par osmose directe ou osmose inverse.

4. Procédé selon l'une des revendications précédentes comprenant, entre les étapes h) et j), une étape p) d'ajout d'un ou plusieurs composés d'intérêt nutritionnel, nutraceutique, ou pharmaceutique, préférentiellement hydrophobes, autres qu'une protéine d'origine laitière.

5. Procédé selon la revendication 4, **caractérisé en ce que** l'étape (p) est réalisée par ajout dudit ou desdits composés dans la fraction F2 et mélange sous agitation.

6. Procédé selon l'une des revendications 1 à 5, **caractérisé en ce que** l'étape j) de dénaturation de la béta lactoglobuline est réalisée par traitement thermique incluant le chauffage de la fraction F2 à une température comprise entre 80 et 95°C pendant une durée comprise entre 5 minutes et 30 minutes.

7. Procédé selon l'une des revendications 1 à 5, **caractérisé en ce que** l'étape j) de dénaturation de la béta lactoglobuline est réalisée par traitement à haute pression en semi-continu à une pression comprise entre 1000 et 6000 bars et à une température maintenue au-dessous de 20 à 30°C.

8. Procédé selon l'une des revendications précédentes, **caractérisé en ce que** à l'étape (l) le mélange se réalise selon un ratio fraction F1/fraction F2 compris entre 0,2 et 1.

9. Procédé selon l'une des revendications précédentes comprenant, entre les étapes m) et n), une étape (w) de traitement aux ultrasons du mélange.

10. Procédé selon l'une des revendications précédentes, **caractérisé en ce que** l'étape (a) comprend les étapes suivantes :
r) obtention de protéines solubles du lait par microfiltration d'un lait, de préférence écrémé,
t) déminéralisation sélective de la phase soluble du lait par une étape de nanofiltration (t2) ou d'ultrafiltration (t1),
v) obtention d'un concentrat ou isolat de protéines solubles sous forme de rétentat.

11. Procédé de la revendication 10, comprenant en outre, avant l'étape (t2) de nanofiltration une étape (t1) d'ultrafiltration, la nanofiltration de l'étape (t2) étant alors opérée sur le perméat d'ultrafiltration de cette étape (t1), puis une étape (u) de mélange, en proportions prédéterminées, du rétentat de nanofiltration de l'étape (t2) avec le rétentat d'ultrafiltration de l'étape (t1).

12. Concentrât ou isolat de protéines solubles du lait, susceptible d'être obtenu par le procédé selon l'une des revendications 1 à 11 et comprenant entre 35 et 95%, en poids, de protéines solubles de lait.

13. Concentrat ou isolat de protéines solubles de lait selon la revendication 12, **caractérisé en ce qu'**il contient :
- de l'alpha lactalbumine, de la sérum albumine, de la lactoferrine, des immunoglobulines et des facteurs de croissance sous forme native,
- de la béta lactoglobuline stabilisée sous forme dénaturée.

14. Concentrat ou isolat de protéines solubles selon la revendication 13, **caractérisé en ce qu'**il contient un ou plusieurs composés d'intérêt nutritionnel, nutraceutique, ou pharmaceutique, préférentiellement hydrophobes, autres qu'une protéine d'origine laitière, tels que des lipides, des acides gras, des vitamines, des enzymes.

15. Composition de nutrition orale ou entérale, **caractérisée en ce qu'**elle comprend un concentrat ou isolat de protéines solubles selon l'une des revendications 12 à 14.

16. Composition selon la revendication 15, **caractérisée en ce qu'**elle se présente sous la forme d'un aliment, d'un liquide, d'une boisson, d'une boisson stérilisée, d'une soupe, d'une purée d'une crème ou d'un gel.

## Patentansprüche

1. Verfahren zur Herstellung eines Konzentrats oder eines Isolats löslicher Milchproteine, das stabil gegenüber Wärmebehandlungen ist, die folgenden Schritte umfassend:
a) Erhalten löslicher Milchproteine in Form eines Konzentrats oder eines Isolats, das mittels einer Methode erhalten wurde, welche eine physikalische Auftrennung der Bestandteile der Milch durch Filtration beinhaltet,
b) Verdünnen bis zu einem Trockenmassewert von 10 bis 15 %,
c) Einstellen des pH-Werts derart, dass dieser zwischen 3,4 und 3,7 liegt,
d) Reifenlassen zwischen 30 min. und 60 min. bei einer Temperatur im Bereich von 50 bis 60 °C,
e) Verdünnen bis auf 3 % TM,
f) physikalisches Auftrennen der Proteine in eine Fraktion (F1), die alpha-Lactalbumin, Immunglobuline, Lactoferrin, BSA enthält, und eine Fraktion (F2), die beta-Lactoglobulin enthält,
g) Gewinnen der Fraktion (F1) und Einstellen des pH-Werts auf einen Wert im Bereich von 7 bis 8,
h) Gewinnen der Fraktion (F2) und Einstellen des pH-Werts auf einen Wert im Bereich von 6 bis 8,
i) Aufkonzentrieren, bei einer Temperatur von weniger als 20 °C, der Fraktion (F2) bis zu einem Trockenmassewert von 8 bis 15 %,
j) Denaturieren des beta-Lactoglobulins der Fraktion (F2),
k) Erhalten einer Fraktion F2, welche das denaturierte beta-Lactoglobulin beinhaltet,
l) Vermischen der Fraktion (F1), welche im Schritt g) erhalten wurde, und der Fraktion (F2), welche im Schritt k) erhalten wurde,
m) Aufkonzentrieren der Mischung, bei einer Temperatur von weniger als 20 °C, bis zu einem Trockenmassewert von 25 bis 30 %,
n) Verarbeiten zu einem Pulver und Trocknen gemäß Techniken, die bei einer Temperatur von weniger als 60 °C ablaufen,
o) Erhalten eines wärmestabilen Konzentrats oder Isolats löslicher Milchproteine in Pulverform.

2. Verfahren nach Anspruch 1, **dadurch gekennzeichnet, dass** der Schritt (f) durch Zentrifugation oder Mikrofiltration erfolgt.

3. Verfahren nach einem der vorhergehenden Ansprüche, **dadurch gekennzeichnet, dass** die Schritte des Aufkonzentrierens (i) und (m) durch direkte Osmose oder Umkehrosmose erfolgen.

4. Verfahren nach einem der vorhergehenden Ansprüche, das zwischen den Schritten h) und j) einen Schritt p) des Zusetzens einer oder mehrerer Verbindungen mit ernährungsbezogenem, nutrazeutischem oder pharmazeutischem Nutzwert umfasst, wobei diese vorzugsweise hydrophob sind und keine Milchproteine darstellen.

5. Verfahren nach Anspruch 4, **dadurch gekennzeichnet, dass** der Schritt (p) durchgeführt wird, indem die Verbindung(en) der Fraktion F2 zugesetzt wird/werden und eine Vermischung unter Rühren erfolgt.

6. Verfahren nach einem der Ansprüche 1 bis 5, **dadurch gekennzeichnet, dass** der Schritt j) des Denaturierens des beta-Lactoglobulins durch eine Wärmebehandlung erfolgt, welche das Erhitzen der Fraktion F2 auf eine Temperatur im Bereich von 80 bis 95 °C über einen Zeitraum im Bereich von 5 Minuten bis 30 Minuten beinhaltet.

7. Verfahren nach einem der Ansprüche 1 bis 5, **dadurch gekennzeichnet, dass** der Schritt j) des Denaturierens des beta-Lactoglobulins durch eine halbkontinuierliche Hochdruckbehandlung bei einem Druck im Bereich im Bereich von 1000 bis 6000 bar erfolgt, wobei eine Temperatur von weniger als 20 bis 30 °C aufrechterhalten wird.

8. Verfahren nach einem der vorhergehenden Ansprüche, **dadurch gekennzeichnet, dass** der Schritt (l) des Vermischens gemäß einem Verhältnis von Fraktion F1 / Fraktion F2 durchgeführt wird, das im Bereich von 0,2 bis 1 liegt.

9. Verfahren nach einem der vorhergehenden Ansprüche, wobei es zwischen den Schritten m) und n) einen Schritt (w) des Behandeln der Mischung mit Ultraschall umfasst.

10. Verfahren nach einem beliebigen der vorhergehenden Ansprüche, **dadurch gekennzeichnet, dass** der Schritt (a) die folgenden Schritte umfasst:
r) Erhalten löslicher Milchproteine durch Mikrofiltration einer Milch, die vorzugsweise entrahmt ist,
t) selektives Entmineralisieren der löslichen Phase der Milch durch einen Schritt der Nanofiltration (t2) oder der Ultrafiltration (t1),
v) Erhalten eines Konzentrats oder Isolats löslicher Proteine in Form eines Retentats.

11. Verfahren nach Anspruch 10, das darüber hinaus im Vorfeld des Schrittes (t2) der Nanofiltration einen Schritt (t1) der Ultrafiltration umfasst, woraufhin die Nanofiltration des Schrittes (t2) an dem Ultrafiltrationspermeat dieses Schrittes (t1) vorgenommen wird, und anschließend einen Schritt (u) des Vermischens, in vorbestimmten Anteilen, des Nanofiltrationsfiltrats des Schrittes (t2) mit dem Ultrafiltrationsretentat des Schrittes (t1).

12. Konzentrat oder Isolat löslicher Milchproteine, das mittels des Verfahrens nach einem der Ansprüche 1 bis 11 erhalten werden kann und zwischen 35 bis 95 Gewichts- % an löslichen Milchproteinen umfasst.

13. Konzentrat oder Isolat löslicher Milchproteine nach Anspruch 12, **dadurch gekennzeichnet, dass** es Folgendes enthält:
- alpha-Lactalbumin, Serumalbumin, Lactoferrin, Immunglobuline und Wachstumsfaktoren in nativer Form,
- beta-Lactoglobulin, das in denaturierter Form stabilisiert ist.

14. Konzentrat oder Isolat löslicher Proteine nach Anspruch 13, **dadurch gekennzeichnet, dass** es eine oder mehrere Verbindung mit ernährungsbezogenem, nutrazeutischem oder pharmazeutischem Nutzwert enthält, wobei diese vorzugsweise hydrophob sind und keine Milchproteine darstellen, wie etwa Lipide, Fettsäuren, Vitamine, Enzyme.

15. Zusammensetzung zur oralen oder enteralen Ernährung, die **dadurch gekennzeichnet ist, dass** sie ein Konzentrat oder Isolat löslicher Proteine nach einem der Ansprüche 12 bis 14 umfasst.

16. Zusammensetzung nach Anspruch 15, **dadurch gekennzeichnet, dass** sie in Form eines Lebensmittels, einer Flüssigkeit, eines Getränks, eines sterilisierten Getränks, einer Suppe, eines Pürees, einer Creme oder eines Gels vorliegt.

## Claims

1. Process for obtaining a concentrate or isolate of soluble milk proteins, which is stable with respect to heat treatments, including the following steps:
a) producing soluble milk proteins in the form of a concentrate or an isolate obtained via a method including physical separation by filtration of the milk components,
b) diluting to a solids content of 10% to 15%,
c) adjusting the pH to between 3.4 and 3.7,
d) maturing for between 30 minutes and 60 minutes at a temperature of between 50 and 60°C,
e) diluting to an SC of 3%,
f) physically separating the proteins into a fraction (F1) containing α-lactalbumin, immunoglobulins, lactoferrin, BSA and a fraction (F2) containing β-lactoglobulin,
g) recovering the fraction (F1) and adjusting the pH to a value of between 7 and 8,
h) recovering the fraction (F2) and adjusting the pH to a value of between 6 and 8,
i) concentrating, at a temperature below 20°C, the fraction (F2) to a solids content of 8-15%,
j) denaturing the β-lactoglobulin of the fraction (F2),
k) producing a fraction F2 including the denatured β-lactoglobulin,
l) mixing the fraction (F1) obtained in step g) and the fraction (F2) obtained in step k),
m) concentrating the mixture, at a temperature below 20°C, to a solids content of 25-30%,
n) transforming into a powder and drying according to techniques taking place at a temperature below 60°C,
o) producing a heat-stable concentrate or isolate of soluble milk proteins in powder form.

2. Process according to Claim 1, **characterized in that** step (f) is performed by centrifugation or microfiltration.

3. Process according to either of the preceding claims, **characterized in that** the concentrating steps (i) and (m) are performed by direct osmosis or reverse osmosis.

4. Process according to one of the preceding claims, comprising, between steps h) and j), a step p) of adding one or more compounds of nutritional, nutraceutical or pharmaceutical interest, which are preferentially hydrophobic, other than a protein of dairy origin.

5. Process according to Claim 4, **characterized in that** step (p) is performed by adding said compound(s) to the fraction F2 and mixing with stirring.

6. Process according to one of Claims 1 to 5, **characterized in that** step j) of denaturing the β-lactoglobulin is performed by heat treatment including heating of the fraction F2 at a temperature of between 80 and 95°C for a period of between 5 minutes and 30 minutes.

7. Process according to one of Claims 1 to 5, **characterized in that** step j) of denaturing the β-lactoglobulin is performed by semi-continuous highpressure treatment at a pressure of between 1000 and 6000 bar and at a temperature maintained below 20 to 30°C.

8. Process according to one of the preceding claims, **characterized in that**, in step (l), the mixing is performed in a fraction F1/fraction F2 ratio of between 0.2 and 1.

9. Process according to one of the preceding claims, comprising, between steps m) and n), a step (w) of ultrasonic treatment of the mixture.

10. Process according to one of the preceding claims, **characterized in that** step (a) comprises the following steps:
r) producing soluble milk proteins by microfiltration of a milk, preferably a skimmed milk,
t) selective demineralization of the soluble phase of the milk by means of a nanofiltration (t2) or ultrafiltration (t1) step,
v) producing a concentrate or isolate of soluble proteins in the form of a retentate.

11. Process according to Claim 10, also comprising, before the nanofiltration step (t2), an ultrafiltration step (t1), the nanofiltration step (t2) then being performed on the ultrafiltration permeate of this step (t1), followed by a step (u) of mixing, in predetermined proportions, the nanofiltration retentate from step (t2) with the ultrafiltration retentate from step (t1).

12. Concentrate or isolate of soluble milk proteins, which may be obtained via the process according to one of Claims 1 to 11 and comprising between 35% and 95% by weight of soluble milk proteins.

13. Concentrate or isolate of soluble milk proteins according to Claim 12, **characterized in that** it contains:
- α-lactalbumin, serum albumin, lactoferrin, immunoglobulins and growth factors in native form,
- stabilized β-lactoglobulin in denatured form.

14. Concentrate or isolate of soluble proteins according to Claim 13, **characterized in that** it contains one or more compounds of nutritional, nutraceutical or pharmaceutical interest, which are preferentially hydrophobic, other than a protein of dairy origin, such as lipids, fatty acids, vitamins or enzymes.

15. Oral or enteral nutritional composition, **characterized in that** it comprises a concentrate or isolate of soluble proteins according to one of Claims 12 to 14.

16. Composition according to Claim 15, **characterized in that** it is in the form of a food, a liquid, a beverage, a sterilized beverage, a soup, a puree, a cream or a gel.
